# EUROPÄISCHE PATENTSCHRIFT

(11) **EP 0 585 953 B1**
(45) Veröffentlichungstag und Bekanntmachung des Hinweises auf die Patenterteilung: **14.08.1996**
(21) Anmeldenummer: 93114179.0
(22) Anmeldetag: 03.09.1993
(51) Int. Cl.: B62D 33/037

(54) **Riegelspannverschluss für abklappbare Bordwände von Lastfahrzeugen**
Bolt tensioning lock for hinged tailboards of lorries
Fermeture de serrage à verrou pour ridelles rabattables de camions

(30) Priorität: 04.09.1992 DE 9211946 U
(43) Veröffentlichungstag der Anmeldung: 09.03.1994
(73) Patentinhaber: F. HESTERBERG & SÖHNE GmbH & Co. KG, D-58256 Ennepetal (DE)
(72) Erfinder: Feinbier, Joachim, Dipl.-Ing., D-58256 Ennepetal (DE); Nieland, Friedhelm, D-58339 Breckerfeld (DE); Tiedtke, Henning, Dipl.-Ing., D-58256 Ennepetal (DE); Bosch, Heiko, D-58339 Breckerfeld (DE); Sterner, Bernd, D-58099 Hagen (DE)
(74) Vertreter: Kneissl, Richard, Dr.

(56) Entgegenhaltungen:
- EP-A- 0 470 298
- DE-A- 2 613 319

## Beschreibung

Die Erfindung betrifft einen Riegelspannverschluß für abklappbare Bordwände von Lastfahrzeugen gemäß dem Oberbegriff des vorstehenden Patentanspruchs 1.

Ein solcher Riegelspannverschluß ist beispielsweise aus der DE-PS 26 13 319 bekannt.

Verschlüsse dieser Art werden vielfach an Bordwänden von Lastfahrzeugen verwendet. Sie besitzen jedoch den Nachteil, daß sie sich ohne weiteres öffnen lassen, wenn Ladegut gegen die Bordwand drückt. Es kommt nicht selten vor, daß während der Fahrt Ladegut verrutscht und gegen die Bordwand drückt. Wird dann der Bordwandverschluß geöffnet, so wird die Bordwand heruntergeschleudert, wobei auch Ladegut herunterfallen kann. Dabei kann es leicht zu Verletzungen kommen.

Der Erfindung lag die Aufgabe zugrunde, einen in Rede stehenden Verschluß so weiterzubilden, daß er sich nicht öffnen läßt, wenn von innen her Druck auf der Bordwand liegt.

Die Lösung dieser Aufgabe ergibt sich aus dem Kennzeichen des vorstehenden Anspruchs 1. Der im Anspruch 1 verwendete Ausdruck "Gehäuse" umfaßt alle Arten von Vorrichtungen, die an einer Bordwand befestigt werden können und die Stege, Vorsprünge, Rücksprünge oder dgl. aufweisen, mit deren Hilfe die beweglichen Teile angelenkt oder geführt werden können.

Die Ansprüche 2 und 3 betreffen vorteilhafte Weiterbildungen.

Die Erfindung wird anhand der beigefügten Zeichnungen näher erläutert.

In den Zeichnungen zeigen:

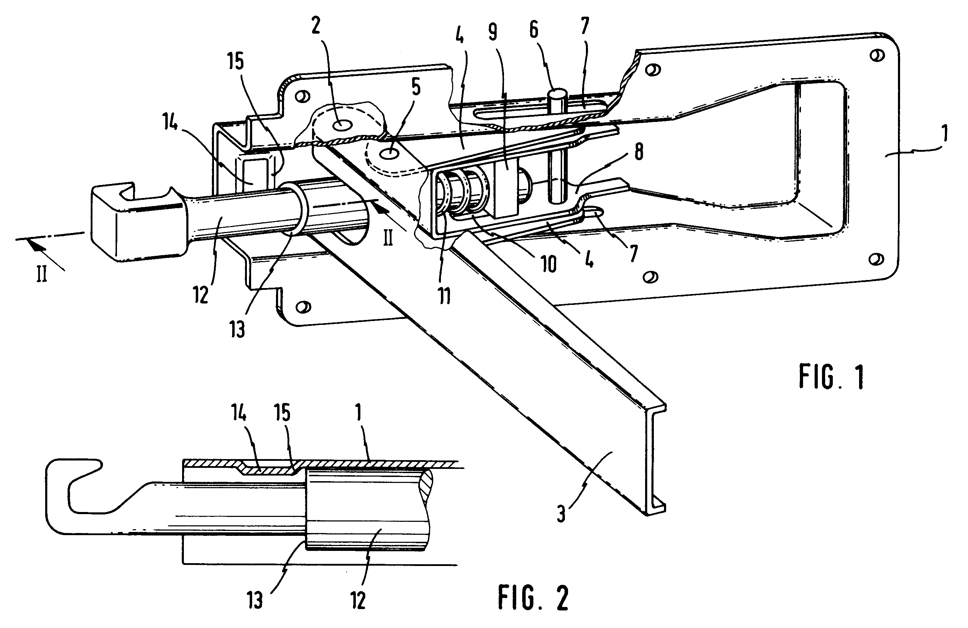

- Figur 1: eine perspektivische Ansicht eines erfindungsgemäßen Riegelspannverschlusses und
- Figur 2: einen vergrößerten Schnitt eines Details des Verschlusses von Figur 1 im Bereich des Riegelhakens.

Der Riegelspannverschluß besitzt eine Einbauwanne 1, wie sie bei Verschlüssen dieser Art üblich ist. In der Einbauwanne 1 ist mittels zweier Achsen 2 (eine ist nur zu sehen) eine gabelförmige Handhabe 3 angelenkt. An der Handhabe 3 sind Verbindungsglieder 4 mittels Achsen 5 (eine ist nur zu sehen) angelenkt. Die Verbindungsglieder 4 wirken auf eine Achse 6, die in Schlitzen 7 in den Seitenwandungen der Einbauwanne 1 geführt ist. Auf der Achse 6 ist schwenkbar ein bügelförmiger Riegelstumpf 8 angeordnet. In diesem Riegelstumpf 8 ist ein Druckstück mittels (nicht zu sehender) Zapfen in Schlitzen 10 geführt. Zwischen dem Druckstück 9 und dem Verbindungssteg des bügelförmigen Riegelstumpfs 8 ist eine Druckfeder 11 angeordnet. In das Druckstück 9 ist ein Riegelhaken 12 eingeschraubt. Der Riegelhaken 12 besitzt eine Stufe 13. Am Boden der Einbauwanne 1 ist eine Auswölbung 14 mit einer Anlagekante 15 vorgesehen.

Wird bei Innendruck gegen die Bordwand versucht, den erfindungsgemäßen Riegelspannverschluß zu öffnen, dann kommt die Stufe 13 mit der Anlagekante 15 an der Auswölbung 14 in Anlage, so daß der Verschluß nicht weiter geöffnet werden kann. In diesem Fall muß zuerst dafür gesorgt werden, den Innendruck auf die Bordwand wegzunehmen. Beim Öffnen kann dann die Kante 13 am Riegelhaken 12 über die Anlagekante 15 an der Auswölbung 14 aufgleiten, so daß der Verschluß vollständig geöffnet werden kann.

## Patentansprüche

1. Riegelspannverschluß für abklappbare Bordwände von Lastfahrzeugen, mit einem in einem Gehäuse, vorzugsweise einer Einbauwanne, (1) angeordneten längenverstellbaren Riegel (8, 12), der aus einem Riegelstumpf (8) und aus einem in diesem eingeschraubten Riegelhaken (12) besteht und der mittels einer im Gehäuse angelenkten Handhabe (3) über ein einerseits an der Handhabe (3) und andererseits am Riegelstumpf (8) angelenktes Verbindungsglied (4) in Verriegelungsstellung bringbar ist, in welcher sich die Anlenkachse (5) zwischen dem Verbinddungsglied und der Handhabe in einer Übertotpunktlage befindet, wobei der Riegelhaken gegenüber dem Gehäuse durch eine Federanordnung (9,11) abgefedert ist und wobei der Riegel in einer waagrechten und senkrecht zur Bordwand verlaufenden Ebene schwenkbar ist, dadurch gekennzeichnet, daß der Riegelhaken eine Stufe (13) aufweist, die mit einer Stufe (15) am Gehäuse in Anlage kommt, wenn der Riegel in einer durch Innendruck auf die Bordwand hervorgerufenen, gegenüber seiner normalen Bewegung geschwenkten Lage von der Verriegelungsstellung in die Offenstellung bewegt wird.

2. Riegelspannverschluß nach Anspruch 1, dadurch gekennzeichnet, daß eine Achse (6) das Verbindungsglied (4) und den Riegelstumpf (8) verbindet und in seitlichen Längsschlitzen (7) im Gehäuse (1) geführt und dadurch in der waagrechten und senkrecht zur Bordwand verlaufenden Ebene schwenkbar ist.

3. Riegelspannverschluß nach Anspruch 1 oder 2, dadurch gekennzeichnet, daß die Stufe (15) am Boden des Gehäuses (1) angeordnet und durch eine Auswölbung (14) gebildet ist.

## Claims

1. Bolt tensioning lock for hinged tailboards of lorries, having a bolt (8, 12) which is arranged in a housing, preferably a built-in trough (1), is adjustable in length, consists of a bolt stump (8) and of a bolt hook (12) screwed into said stump and can be brought, by means of a handle (3) hinged in the housing, via a connecting member (4) hinged on the one hand on the handle (3) and on the other hand on the bolt stump (8), into the locked position in which the hinge pin (5) between the connecting member and the handle is located in an above-dead-centre position, the bolt hook being spring-mounted relative to the housing by means of a spring arrangement (9, 11) and the bolt being rotatable in a horizontal plane perpendicular to the tailboard, characterized in that the bolt hook has a step (13) which comes into contact with a step (15) on the housing when the bolt, in a position brought about by internal pressure on the tailboard and rotated relative to its normal movement, is moved from the locked position to the open position.

2. Bolt tensioning lock according to Claim 1, characterized in that a pin (6) connects the connecting member (4) and the bolt stump (8) and is passed into lateral longitudinal slots (7) in the housing (1) and is thus rotatable in the horizontal plane perpendicular to the tailboard.

3. Bolt tensioning lock according to Claim 1 or 2, characterized in that the step (15) is arranged on the bottom of the housing (1) and is formed by a convex element (14).

## Revendications

1. Fermeture de serrage à verrou pour ridelles rabattables de camion, avec, disposé dans un boîtier, de préférence une cuvette encastrée (1), un verrou réglage longitudinalement (8, 12) qui se compose d'un talon (8) de verrou et d'un fermoir (12) de verrou qui s'insère dans celui-ci, et qui peut être amené, au moyen d'une poignée (3) articulée au boîtier, par l'intermédiaire d'un moyen de raccordement (4) articulé d'un côté à la poignée (3) et de l'autre côté au talon (8) du verrou, en position de verrouillage dans laquelle l'axe (5) de l'articulation entre le moyen de raccordement et la poignée se situe au-delà du point mort, le fermoir du verrou étant monté à ressort par rapport au boîtier par l'intermédiaire d'un dispositif à ressort (9, 11) et le verrou pouvant être basculé dans un plan horizontal s'étendant perpendiculairement à la ridelle, caractérisée en ce que, le fermoir du verrou présente un épaulement (13), qui vient buter contre un épaulement (15) du boîtier, lorsque le verrou est déplacé de sa position de verrouillage à sa position d'ouverture en une position inclinée par rapport à son déplacement normal, suite à une pression intérieure exercée sur la ridelle.

2. Fermeture de serrage à verrou selon la revendication 1, caractérisée en ce qu'un axe (6) relie le moyen de raccordement (4) et le talon du verrou (8) et est guidé dans une fente (7) longitudinale latérale du boîtier (1) et en ce qu'elle peut pivoter dans le plan qui s'étend horizontalement et perpendiculairement à la ridelle.

3. Fermeture de serrage à verrou selon la revendication 1 ou 2, caractérisée en ce que l'épaulement (15) est dispose sur le corps du boîtier (1) et est formé par un bossage (14) qui pointe vers l'extérieur.
